# EUROPEAN PATENT APPLICATION

(11) **EP 3 573 008 A1**
(43) Date of publication of application: **27.11.2019**
(21) Application number: 18741343.0
(22) Date of filing: 10.01.2018
(51) Int. Cl.: G06Q 30/06

(54) **DATA OBJECT INFORMATION PROCESSING METHOD, DEVICE AND SYSTEM**

(30) Priority: 22.01.2017 CN 201710047501
(71) Applicant: Alibaba Group Holding Limited, Grand Cayman (KY)
(72) Inventor: WANG, Shuimin, Zhejiang 311121 (CN)
(74) Representative: Finnegan Europe LLP
(86) International application number: PCT/CN2018/072040
(87) International publication number: WO 2018/133714

(57) **Abstract**

A data object information processing method, apparatus, and system are disclosed in embodiments of this application. The system comprises: a suspension chain conveyance subsystem deployed in an offline store comprising a plurality of first operation regions and a plurality of second operation regions. The suspension chain conveyance subsystem comprises a control component and a conveying track. The conveying track is configured to connect the first operation regions and the second operation regions. The control component is configured to assign a second operation region according to the wave identifier after a notification message is received from the first operation execution subsystem. Various first operation tasks of the same wave correspond to the same second operation region. A conveyance instruction is sent to the conveying track according to the assignment result, for conveying the first operation container to the corresponding second operation region. With the embodiments of this application, the efficiency of the first and second operations can be improved, and the timeliness of delivery can be better guaranteed.

## Description

This application claims priority to Chinese Patent Application No. 201710047501.9, filed on January 22, 2017 and entitled "DATA OBJECT INFORMATION PROCESSING METHOD, APPARATUS, AND SYSTEM," which is incorporated herein by reference in its entirety.

### Technical Field

This application relates to the field of data object information processing technologies, and in particular, to a data object information processing method, apparatus, and system.

### Background

Online To Offline (O2O) means merging offline business opportunities with the Internet to make the Internet a platform for offline transactions. With the upgrading of service-oriented e-commerce modes, commodities (services), ordering, and payment processes have been improved, and previous simple e-commerce modules have been shifted to more frequent, life-oriented scenarios. Because the conventional service industry has always been in a state of low efficiency and insufficient labor absorption, an O2O boom has emerged, driven by new modes, and thus home delivery of meals (commonly referred to as "take-out"), home delivery of fresh products, door-to-door makeup, and other O2O modes are beginning to emerge one after another.

Here, offline stores corresponding to fresh commodity objects may be referred to as "supermarkets." In an actual application, a supermarket may be provided with a plurality of stalls, which, for example, may include a fruit stall, a seafood stall, and so on. Specific goods in each stall may be purchased and enter the supermarket in advance. Unlike fast-food commodity objects, the fresh commodity objects usually cannot be packaged in advance according to standardized packaging tools such as "meal boxes." For example, if the commodity is apples, a consumer may specify the number of kilograms to be purchased when placing an order. After the supermarket receives the order, it usually needs to weigh the apples first and package them. In other words, the fresh commodity objects are usually "processed" according to specifications in orders after the orders are received. The so-called "processing" may include weighing of goods and other operations. After the processing is completed, the commodity objects are packaged and await delivery.

As can be seen, it usually takes more time to carry out offline order-picking, packaging, delivery, and other operations on commodities such as fresh commodities after online orders are received, and it is often difficult to guarantee the timeliness of delivery. Therefore, how to improve the efficiency of offline operations and improve the timeliness of delivery has become a technical problem that needs to be solved by those skilled in the art.

### Summary of the Invention

A data object information processing method, apparatus, and system are provided in this application, which can improve the efficiency of first and second operations and can better guarantee the timeliness of delivery.

The following solutions are provided in this application.

A data object information processing system, comprising:
an order processing subsystem configured to merge a plurality of orders meeting a condition into the same wave according to a preset rule;
a first operation task generation subsystem configured to classify data objects included in the various orders of the same wave according to different first operation regions where the corresponding goods are located, generate a plurality of first operation tasks according to the classification results, and allocate them to a corresponding first operation execution subsystem;
the first operation execution subsystem configured to, after a message indicating that a current first operation task has been completed and a first operation container has been suspended from a suspension chain is received, notify a suspension chain conveyance subsystem of the task identifier of the current first operation task and the wave identifier of the wave to which it belongs, wherein goods corresponding to the current first operation task are contained in the first operation container; and
the suspension chain conveyance subsystem deployed in an offline store including a plurality of first operation regions and a plurality of second operation regions, wherein the suspension chain conveyance subsystem includes a control component and a conveying track, the conveying track is configured to connect the first operation regions and the second operation regions, and the control component is configured to assign a second operation region according to the wave identifier after a notification message is received from the first operation execution subsystem, wherein the various first operation tasks of the same wave correspond to the same second operation region, and a conveyance instruction is sent to the conveying track according to the assignment result, for conveying the first operation container to the corresponding second operation region.

A data object information processing method, comprising:
a first operation task generation subsystem receiving operation-pending wave information, wherein a plurality of orders meeting a preset condition are merged into the same wave;
classifying data objects included in the various orders of the same wave according to different first operation regions where the corresponding goods are located; and
generating a plurality of first operation tasks according to the classification results, allocating them to a corresponding first operation execution subsystem, notifying, by the first operation execution subsystem, a suspension chain conveyance subsystem of the task identifier of a current first operation task and the wave identifier of the wave to which it belongs after a message indicating that the first operation task has been completed and a first operation container has been suspended from a suspension chain is received, and conveying, by the suspension chain conveyance subsystem, first operation containers corresponding to the various first operation tasks of the same wave to the same second operation region, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

A data object information processing method, comprising:
receiving a first operation task by a first operation execution subsystem, wherein the first operation task is one of a plurality of first operation tasks disassembled from the same wave, and the same wave corresponds to a plurality of orders meeting a condition; and
after a message indicating that the first operation task has been completed and a corresponding first operation container has been suspended from a suspension chain is received, notifying a suspension chain conveyance subsystem of the task identifier of the first operation task and the wave identifier of the wave to which it belongs, and conveying, by the suspension chain conveyance subsystem, first operation containers corresponding to the various first operation tasks of the same wave to the same second operation region, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

A data object information processing method, comprising:
receiving, by a suspension chain conveyance subsystem, a notification message provided by a first operation execution subsystem and indicating that a first operation task has been completed and a first operation container has been suspended from a conveying track, wherein the suspension chain conveyance subsystem is deployed in an offline store including a plurality of first operation regions and a plurality of second operation regions, and the suspension chain conveyance subsystem includes a control component and the conveying track configured to connect the various first operation regions and the various second operation regions;
assigning a second operation region according to the identifier of the wave to which the first operation task belongs, wherein the various first operation tasks of the same wave correspond to the same second operation region, and the same wave corresponds to a plurality of orders meeting a condition and is disassembled into a plurality of first operation tasks; and
sending a conveyance instruction to the conveying track according to the assignment result, so that the first operation container is conveyed to the corresponding second operation region.

A data object information processing apparatus, applied to a first operation task generation subsystem, comprising:
a wave information receiving unit configured to receive operation-pending wave information, wherein a plurality of orders meeting a preset condition are merged into the same wave;
a classifying unit configured to classify data objects included in the various orders of the same wave according to different first operation regions where the corresponding goods are located; and
a task generating unit configured to generate a plurality of first operation tasks according to the classification results, and allocate them to a corresponding first operation execution subsystem, wherein after a message indicating that a first operation task has been completed and a first operation container has been suspended from a suspension chain is received, the first operation execution subsystem notifies a suspension chain conveyance subsystem of the task identifier of the current first operation task and the wave identifier of the wave to which it belongs, and the suspension chain conveyance subsystem conveys first operation containers corresponding to the various first operation tasks of the same wave to the same second operation region, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

A data object information processing apparatus, applied to a first operation execution subsystem, comprising:
a task receiving unit configured to receive a first operation task, wherein the first operation task is one of a plurality of first operation tasks disassembled from the same wave, and the same wave corresponds to a plurality of orders meeting a condition; and
a notification unit configured to, after a message indicating that the first operation task has been completed and a corresponding first operation container has been suspended from a suspension chain is received, notify a suspension chain conveyance subsystem of the task identifier of the first operation task and the wave identifier of the wave to which it belongs, wherein the suspension chain conveyance subsystem conveys first operation containers corresponding to the various first operation tasks of the same wave to the same second operation region, the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

A data object information processing apparatus, applied to a suspension chain conveyance subsystem, comprising:
a notification message receiving unit configured to receive a notification message provided by a first operation execution subsystem and indicating that a first operation task has been completed and a first operation container has been suspended from a conveying track, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions;
a region assigning unit configured to assign a second operation region according to the identifier of the wave to which the first operation task belongs, wherein the various first operation tasks of the same wave correspond to the same second operation region, and the same wave corresponds to a plurality of orders meeting a condition and is disassembled into a plurality of first operation tasks; and
a conveyance instruction sending unit configured to send a conveyance instruction to the conveying track according to the assignment result, so that the first operation container is conveyed to the corresponding second operation region.

According to specific embodiments provided in this application, the following technical effects are disclosed in this application.

By use of the embodiments of this application, the first operations, conveyance, and second operations in the offline store can be connected organically. The containers produced from the first operations can be conveyed to the second operation regions automatically by the suspension chain subsystem. Moreover, different first operation tasks of the same wave may also converge in the same second operation region to improve the efficiency of the first and second operations, and the timeliness of delivery can be better guaranteed.

In addition, a fault management subsystem is further provided in the embodiments of this application, which may track first operation task status, assignment of the second operation regions, and the like. Once some first operation tasks of a certain wave fail to arrive at a scheduled second operation region on time, the fault management subsystem can be utilized to make a query and locate the cause of the exception, thus avoiding stalling of the operations of the whole wave.

Of course, the implementation of any product of this application does not necessarily need to achieve all the advantages described in the foregoing at the same time.

### Brief Description of the Drawings

In order to describe the technical solutions in the embodiments of this application or in the prior art more clearly, the accompanying drawings to be used in the description of the embodiments will be briefly introduced in the following. It is apparent that the accompanying drawings described in the following are merely some embodiments of this application. Those of ordinary skill in the art may further obtain other accompanying drawings according to these accompanying drawings without creative efforts.
FIG. 1 is a schematic architectural diagram of software and hardware according to an embodiment of this application;
FIG. 2 is a schematic diagram of a system according to an embodiment of this application;
FIG. 3 is a flowchart of a first method according to an embodiment of this application;
FIG. 4 is a flowchart of a second method according to an embodiment of this application;
FIG. 5 is a flowchart of a third method according to an embodiment of this application;
FIG. 6 is a schematic diagram of a first apparatus according to an embodiment of this application;
FIG. 7 is a schematic diagram of a second apparatus according to an embodiment of this application; and
FIG. 8 is a schematic diagram of a third apparatus according to an embodiment of this application.

### Detailed Description

The technical solutions in the embodiments of this application will be clearly and completely described in the following with reference to the accompanying drawings in the embodiments of this application. It is apparent that the embodiments described are merely some of rather than all the embodiments of this application. All other embodiments obtained by those of ordinary skill in the art based on the embodiments in this application without creative efforts shall fall within the protection scope of this application.

In the embodiments of this application, in order to improve the efficiency of order-picking and delivery, a suspension chain conveyance system may be deployed in an offline store. The suspension chain conveyance system includes a conveying track, a suspension chain, and other automatic conveyance devices. Thus, after receiving of an order and completing a first operation (e.g., order-picking and other operations), it can be conveyed to a preset second operation (e.g., packaging and other operations) region by the suspension chain and the conveying track. If the offline store includes a plurality of first operation regions, that is, a plurality of "stalls," each "stall" can be provided with a conveying track for conveyance to a centralized second operation region. Each conveying track can be provided with a suspension chain. That is, there may be several suspension chains, each of which has a conveyance starting point corresponding to the position of a first operation region and an ending point corresponding to a second operation region. After a first operation task is received, corresponding goods may be weighed or the like in a certain stall, loaded into a preset container such as a packaging bag, and suspended from the suspension chain. After that, the corresponding conveying track may automatically convey the container containing the corresponding goods to a second operation region, a second operation such as packaging can be carried out in the second operation region, and a deliverer can deliver the goods. Thus, a first operator only needs to perform operations such as weighing the goods and suspending the goods on the suspension chain, but does not need to send the goods from the first operation region to the second operation region. Therefore, work efficiency can be improved.

In a small offline store or when there is a small quantity of orders, there may be one second operation region, that is, all first operation containers produced from the first operation can converge in the same second operation region for packaging. However, considering that the number of concurrent orders is increasing as the number of users increases, it may still cause a bottleneck of operational efficiency to have the same second operation region perform the second operation when there is a large number of orders. Therefore, in order to further improve the efficiency of the first operation, the second operation, and other operations and to ensure the timeliness of delivery, there may also be a plurality of second operation regions in the embodiments of this application. In other words, an offline store may include a plurality of first operation regions and a plurality of second operation regions. The so-called "plurality of first operation regions" mean a plurality of "stalls." Each of the first operation regions is configured to store the same type of goods. Correspondingly, the first operation for this type of goods (for example, mainly the order-picking operation) is also carried out in the first operation region. The second operation region refers to a region where operations such as packaging are performed. In other words, the first operation and the second operation may be performed synchronously in several different regions to improve the efficiency of the first and second operations.

In addition, due to the frequent occurrence of a large number of concurrent orders, that is, receiving a plurality of orders in a very short time, if a delivery is performed for each order, clearly this will use a large number of delivery resources, which will reduce the timeliness of delivery when delivery resources are limited. Therefore, orders can also be merged in the embodiments of this application. In other words, a plurality of orders are merged into the same delivery wave, and various orders in the same delivery wave can be delivered by one deliverer at the same time. This can avoid a waste of delivery resources and also better guarantee the timeliness of delivery of the various orders. When orders are merged, some order-merging rules can be made in advance. For example, in consideration of factors such as delivery addresses and required delivery times, the orders with close delivery addresses and required delivery times can be merged into the same wave, and so on.

In the case of generating a delivery wave according to the foregoing order-merging operation, data objects (for example, commodity objects, etc.) involved in the same delivery wave need to be packaged together and delivered by the same deliverer. Therefore, the first operations (such as order-picking operations) may also be performed simultaneously at the time of order-picking. Moreover, the same wave includes a plurality of orders; thus, the same wave may include a plurality of different data objects, and goods corresponding to the data objects may be located in different first operation regions. Therefore, the data objects included in the various orders of the same wave may also be classified according to the different first operation regions where the corresponding goods are located, and a plurality of first operation tasks are generated according to the classification results. In other words, after the orders are merged to generate a wave, the same wave may also be disassembled into a plurality of first operation tasks before the first operation tasks are performed, and one first operation task can be completed by a worker in each first operation region involved.

Upon completion, each first operation task may be conveyed to a second operation region by a suspension chain system. There are a plurality of second operation regions in the embodiments of this application. In specific implementation, there may be a plurality of packaging regions, or the same packaging region includes a plurality of "gates," and corresponding packers at different gates are responsible for packaging operations at the gates. The plurality of "gates" in the same packaging region are essentially equivalent to dividing the packaging region into a plurality of sub-regions, each of which works independently. Therefore, in the embodiments of this application, they are collectively referred to as a plurality of second operation regions. When there are a plurality of second operation regions, during conveyance of the execution results of the first operation tasks by the suspension chain system, the execution results (i.e., containers holding goods associated with the same first operation task, such as packaging bags) of various first operation tasks in the same wave may also be controlled to converge in the same second operation region.

In other words, in the embodiments of this application, the orders may be merged at first to generate a wave, then the wave is disassembled into a plurality of first operation tasks, and the execution results of the various first operation tasks in the same wave converge in the same second operation region. With such automatic control, the efficiency of the first and second operations can be improved, which is beneficial to guaranteeing the timeliness of delivery.

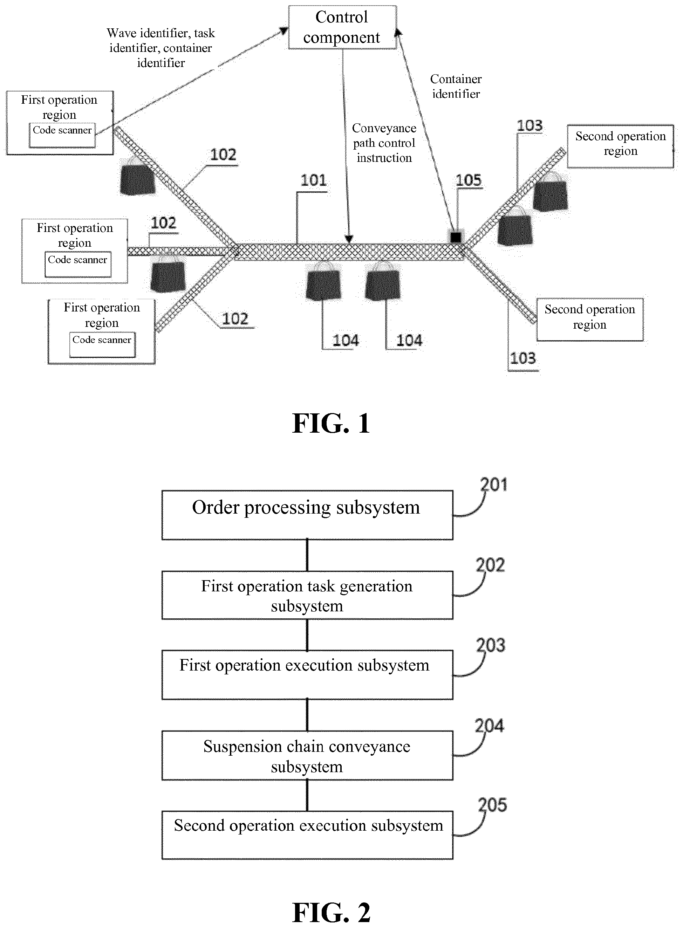

In specific implementation, the suspension chain system may also be deployed in the offline store in a variety of manners, as long as there is a path between each first operation region and each second operation region and specific conveying paths can be controlled in the conveyance process. For example, in one implementation manner, the suspension chain system may be deployed as shown in FIG. 1. Assuming that there are three first operation regions and two second operation regions in the offline store, the conveying track may be divided into a trunk 101, first branches 102, and second branches 103 when the conveying tracks of the suspension chain system are deployed, in order to save space and avoid confusion caused by the interweaving of too many conveying tracks. There may be only one trunk 101, which is the common part of the tracks. There may be a plurality of first branches 102, with the first end of each corresponding to one first operation region and the other end connecting to the trunk 101. Similarly, there may also be a plurality of second branches 103, with the first end of each corresponding to one second operation region and the other end connecting to the trunk 101. Thus, it is possible for the conveying tracks to extend to each first operation region and each second operation region, without interweaving a plurality of tracks. In specific implementation, the conveying track may be "hung" from the ceiling of the offline store, and the operator of the first operation can suspend a container onto the conveying track for conveyance. In this manner, the space of the offline store can be saved to avoid limiting the area of the operation regions in the store due to the existence of the conveying track. In addition, in order to prevent the container from falling off the track in the process of conveyance, a "safety net" can be provided under the track. Thus, if the container falls off the track, it will fall into the "safety net" to avoid hurting people in the offline store or damaging articles in the container. Of course, in other implementation manners, the conveying track may also be laid in other manners, which are not limited here.

When the conveying track is deployed in the foregoing manner, the conveying track may continuously move along the direction from the first operation region to the second operation region under the control of a conveyance execution component such as an automatic driving device. After completing the first operation task, the operators of each operation region may suspend a container 104 holding corresponding articles on the corresponding branch 102, and the container is conveyed to the second operation region by the conveying track. The container 104 may be in the form of a packaging bag or the like. Moreover, for ease of operation, each container 104 may have a connected or integrated member such as a hook (not shown in the figure) through which the container 104 can be suspended from the branch 102 of the conveying track.

In addition, the embodiments of this application relate to the problem of having the processing results of different first operation tasks in the same wave converge in the same second operation region. Therefore, in specific implementation, the following processing may also be performed. First of all, a unique identifier (such as a code) is provided on an outer surface of the container 104, and it may be rendered as a graphic code such as a bar code or a two-dimensional code. Moreover, a code scanner may be provided in each first operation region. After the operator in the first operation region completes a first operation task and places the execution result of the operation in the container 104, the identifier information of the container may be acquired by code scanning. After that, a terminal device of the first operation region may provide a correspondence between the task identifier of the first operation task, the wave identifier corresponding to the first operation task, and the container identifier of the container to the control component in the suspension chain system (that is, in addition to including hardware structures such as the conveying track, the suspension chain system may also control specific conveyance paths via software). Thus, the control component may assign a second operation region according to the wave identifier and allocate different first operation tasks in the same wave to the same second operation region. That is, information recorded in the control component at this point includes: a correspondence between the wave identifier, the identifier of the first operation task, the container identifier, and the second operation region. Then, the foregoing container will be suspended from the branch 102 of the track and then will be transported to the trunk 101 of the track. When the container arrives at the junction between the trunk 101 and the branch 103 of the track, as there are a plurality of branches 103, a code scanning device 105 may also be provided at the junction between the trunk 101 and the branch 102 in order to determine the next conveyance path. When a certain container is transported to the scanning range of the code scanning device 105, the code scanning device may automatically scan a graphic code or the like on an outer surface thereof, and provide the control component with the container identifier in the scanning result. Thus, the control component may know which container has arrived at the junction between the trunk and the second branch, and then the control component may determine which second operation region the container should be transported to according to previously recorded correspondence information. Then, the control component may send a control instruction to the conveyance execution component so that the container is sent to the corresponding second branch 103 and finally conveyed to the corresponding second operation region. As seen from FIG. 1, two containers 104 from two different first branches 102 may be conveyed via the trunk to the same second branch 103, and then sent to the same second operation region, thus achieving "convergence."

In brief, in the foregoing manner, the operator in the first operation region can directly suspend a container from the corresponding track branch after completing the first operation task, without the need of performing operations such as selecting a conveyance track, and the subsequent process can be completed under automatic control, thus helping to improve operation efficiency.

Of course, FIG. 1 is described in the foregoing merely to illustrate a specific implementation solution. In actual applications, another implementation solution may also be adopted. For example, a separate conveying track is deployed between each first operation region and each second operation region, a specific track is assigned prior to suspension, and then a container is suspended from the corresponding track and conveyed to the corresponding second operation region, and so on, which will not be elaborated here.

It should be noted that in the process of performing the first operation, conveyance, and the second operation in the foregoing manner, network or hardware exceptions or task operation errors (such as the second operation region being incorrectly assigned) may occur, resulting in the first operation container sliding into the wrong second operation region, or failed completion of the first operation task, and so on, eventually leading to stalling of the operations of the entire wave. This being the case, an exception management system may also be provided in the embodiments of this application. Information such as the assignment results of the suspension chain system may be provided to the exception management system. Thus, the exception management system may track the execution status of a specific first operation task of a specific wave, and so on. If it is found that an exception has occurred in a certain first operation task of a certain wave, a query may be conducted by the exception management system to determine a possible cause of the exception, and so on. Thus, the cause of the exception can be located rapidly, further guaranteeing the timeliness of delivery.

The implementation solutions of the embodiments of this application are introduced in the following from a variety of different perspectives.

### Embodiment 1

First of all, referring to FIG. 2, Embodiment 1 provides a data object information processing system as a whole. The system may specifically include an order processing subsystem 201, a first operation task generation subsystem 202, a first operation execution subsystem 203, and a suspension chain conveyance subsystem 204.

The order processing subsystem 201 is configured to merge a plurality of orders meeting a condition into the same wave according to a preset rule.

Specifically, the order processing subsystem 201 may be located in a sales platform cloud, and the cloud uniformly merges orders and performs other operations on orders in various offline stores. Alternatively, the order processing subsystem 201 may also be directly deployed in offline stores, each of which merges its respective orders. Specific order-merging rules may be implemented in a variety of specific manners, including merging orders meeting a condition into the same wave according to distances of delivery addresses and proximity of delivery times, and so on, which will not be elaborated here. Specifically, a wave identifier, such as a wave ID or the like, may be generated for a wave after the wave is generated.

The first operation task generation subsystem 202 is configured to classify data objects included in the various orders of the same wave according to different first operation regions where the corresponding goods are located, generate a plurality of first operation tasks according to the classification results, and allocate them to a corresponding first operation execution subsystem 203.

The first operation task generation subsystem 202 may also be located in the cloud or in the offline store. The subsystem may store details of first operation regions in the offline store in advance, and after obtaining the information of a specific wave, it may disassemble the wave into a plurality of different first operation tasks according to various associated data objects in the wave and first operation regions where the data objects are located. Similarly, after each first operation task is generated, an identifier of the first operation task may also be generated, including an id of the first operation task, etc. Moreover, an association between the wave id and the id of each first operation task may be established.

The first operation execution subsystem 203 is configured to, after a message indicating that the current first operation task has been completed and a first operation container has been suspended from a suspension chain is received, notify a suspension chain conveyance subsystem 204 of the task identifier of the current first operation task and the wave identifier of the wave to which it belongs, wherein goods corresponding to the current first operation task are contained in the first operation container.

The first operation execution subsystem 203 may be located in the offline store. A device such as a computer may be deployed in each first operation region, or the workers in each first operation region are equipped with a mobile terminal device. An application corresponding to the first operation execution subsystem 203 may be installed in such computer device or mobile terminal device. Correspondingly, after a first operation task allocated by the first operation task generation subsystem 202 is received, the corresponding worker may be prompted to execute the corresponding task. In addition, the first operation execution subsystem 203 is further capable of transferring information with the suspension chain conveyance subsystem 204. After the worker performs order-picking and other operations according to the specific first operation task, he/she can place the corresponding goods in a container such as a packaging bag and suspend it from the conveying track. At this point, the suspension chain conveyance subsystem may be notified by the first operation execution subsystem 203 that the first operation task has been completed, and at the same time, information such as the corresponding wave identifier and the identifier of the first operation task may also be provided to the suspension chain conveyance subsystem 204. If there is a graphic code and other information on an outer surface of the container, the first operation execution subsystem 203 may also be connected with an external code scanner, or provided with a built-in code scanning function, and so on. A code scanning operation may be performed before the container is suspended from the conveying track. Thus, when the information is provided to the suspension chain conveyance subsystem 204, the information may also include a container identifier in addition to the wave identifier and the identifier of the first operation task.

The suspension chain conveyance subsystem 204 is deployed in an offline store including a plurality of first operation regions and a plurality of second operation regions. The suspension chain conveyance subsystem 204 includes a control component and a conveying track. The conveying track is configured to connect the various first operation regions and the various second operation regions, and the control component is configured to assign a second operation region according to the wave identifier after a notification message is received from the first operation execution subsystem. The first operation tasks of the same wave correspond to the same second operation region, and a conveyance instruction is sent to the conveying track according to the assignment result, for conveying the first operation container to the corresponding second operation region.

The suspension chain conveyance subsystem 204 is deployed in an offline store, and consists of a hardware part and a software part. The hardware part may include specific physical transmission structures such as the conveying track and a driving device, and the software part may be a control component for realizing automatic control over the process of conveying the container by the conveying track. Moreover, the control component may further control a correspondence between the first operation task and the second operation region according to a notification message sent by the first operation execution subsystem 203. Specifically, different first operation tasks of the same wave may converge in the same second operation region, thus improving the efficiency of the first and second operations.

In an actual application, the system may further include a second operation execution subsystem. In this case:
the suspension chain conveyance subsystem 204 may be further configured to provide the second operation execution subsystem with a correspondence between the wave identifier and the identifier of the second operation region; and
correspondingly, the second operation execution subsystem may be configured to generate a second operation task according to the wave identifier, and provide corresponding prompt information of the second operation region identifier.

The second operation execution subsystem may be deployed in the mobile terminal device of a worker such as a packer or in a computer device in a packaging room. When a message indicating that the related first operation container has been conveyed to a certain second operation region is received, a corresponding second operation task may be generated. In the task, prompts regarding information of the corresponding wave, related information of various first operation tasks included in the wave, data object information corresponding to the various first operation tasks, details of various orders associated with the wave, and so on may be delivered to a worker such as a specific packer, and the worker performs a second operation such as packaging. After that, the orders may await a deliverer to carry out delivery in waves.

As described above, in specific implementation, if an outer surface of the first operation container may be provided with a graphic code identifier, the first operation execution subsystem 203 may be further configured to scan and identify the graphic code identifier, obtain the container identifier, establish a correspondence between the wave identifier, the identifier of the first operation task, and the container identifier, and provide the correspondence to the suspension chain conveyance subsystem 204. The control component of the suspension chain conveyance subsystem, after assigning a second operation region according to the wave identifier, stores a correspondence between the wave identifier, the identifier of the first operation task, the container identifier, and the second operation region.

In specific implementation, the conveying track may include a trunk, a plurality of first branches, and a plurality of second branches. One end of each first branch is located in one of the first operation regions, and the other end is connected to the trunk; one end of each second branch is located in one of the second operation regions, and the other end is connected to the trunk.

In this case, the suspension chain conveyance subsystem may further include a code scanning device. The code scanning device is located at the junctions of the trunk and each second branch and configured to scan a graphic code on the outer surface of a first operation container entering its scanning range, identify the container identifier, and provide it to the control component. The control component determines the second operation region corresponding to the container identifier according to the identified container identifier and sends a control instruction to the conveying track. The conveying track transfers the container to a second branch corresponding to the second operation region.

In specific implementation, the control component in the suspension chain conveyance subsystem 204 may be further configured to provide the second operation execution subsystem with the correspondence between the wave identifier, the identifier of the first operation task, the container identifier, and the second operation region. In this case, the second operation execution subsystem may be further configured to scan the graphic code of the first operation container conveyed to the second operation region, and determine the corresponding wave identifier and the identifier of the first operation task according to the scanning result, to confirm completion of the first operation task in the wave.

After that, the second operation execution subsystem may be further configured to generate outbound delivery information after the various first operation tasks in the same wave have been confirmed.

In addition, the system may further include an exception management subsystem.

In this case, the control component in the suspension chain conveyance subsystem 204 may be further configured to, after the second operation region is assigned according to the wave identifier, provide the correspondence between the wave identifier, the identifier of the first operation task, the container identifier, and the second operation region to the exception management subsystem for storage. The second operation execution subsystem may be further configured to send a query request for an exception to the exception management subsystem if a first operation container corresponding to a target first operation task in a wave is not conveyed to the second operation region within a preset time. The exception management subsystem may be specifically configured to provide a query result according to the stored assignment result when the query request for the exception is received.

In specific implementation, the exception management subsystem may be specifically configured to give a prompt in the query result that the first operation task has not been completed if assignment information of the second operation region corresponding to the target first operation task does not exist in the assignment result.

Alternatively, the exception management subsystem may also be specifically configured to, provide the second operation region corresponding to the target first operation task in the query result if assignment information of the second operation region corresponding to the target first operation task exists in the assignment result but the second operation region is different from the second operation region corresponding to other first operation tasks in the wave to which the target first operation task belongs.

In brief, through the foregoing system provided in the embodiment of this application, the first operations, conveyance, and second operations in the offline store can be connected organically. The containers produced from the first operations can be conveyed to the second operation regions automatically by the suspension chain subsystem. Moreover, different first operation tasks of the same wave may also converge in the same second operation region to improve the efficiency of the first and second operations, and the timeliness of delivery can be better guaranteed.

In addition, a fault management subsystem is further provided in the embodiment of this application, which may track first operation task status, assignment of the second operation regions, and the like. Once some first operation tasks of a certain wave fail to arrive at a scheduled second operation region on time, the fault management subsystem can be utilized to make a query and locate the cause of the exception, thus avoiding stalling of the operations of the whole wave.

### Embodiment 2

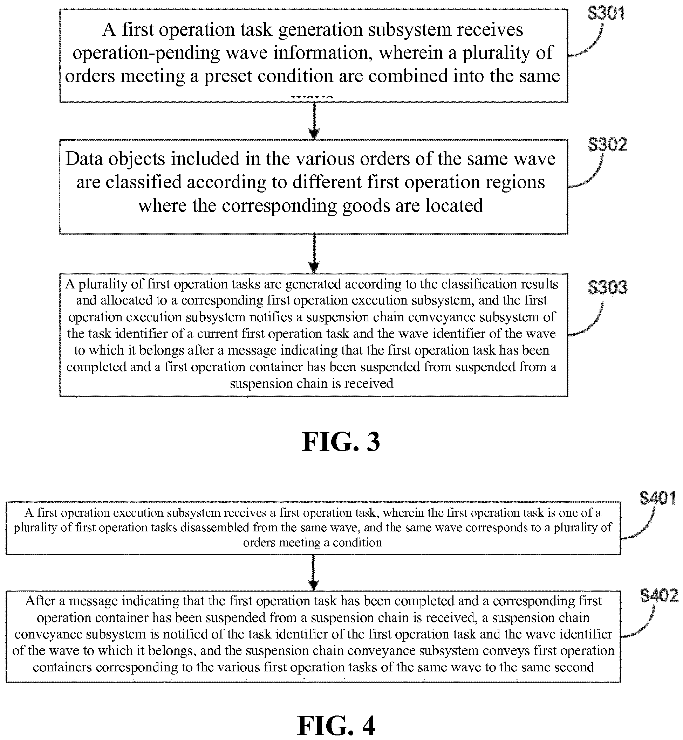

Embodiment 2 corresponds to the aforementioned Embodiment 1. A data object information processing method is provided from the perspective of a first operation task generation subsystem. Referring to FIG. 3, the method may include the following steps:
In S301, a first operation task generation subsystem receives operation-pending wave information, wherein a plurality of orders meeting a preset condition are combined into the same wave.
In S302, data objects included in the various orders of the same wave are classified according to different first operation regions where the corresponding goods are located.
In S303, a plurality of first operation tasks are generated according to the classification results and allocated to a corresponding first operation execution subsystem. The first operation execution subsystem notifies a suspension chain conveyance subsystem of the task identifier of a current first operation task and the wave identifier of the wave to which it belongs after a message indicating that the first operation task has been completed and a first operation container has been suspended from a suspension chain is received. The suspension chain conveyance subsystem conveys first operation containers corresponding to the various first operation tasks of the same wave to the same second operation region. The suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

### Embodiment 3

Embodiment 3 also corresponds to the aforementioned Embodiment 1. A data object information processing method is provided from the perspective of a first operation task execution subsystem. Referring to FIG. 4, the method may include the following steps:
In S401, a first operation execution subsystem receives a first operation task, wherein the first operation task is one of a plurality of first operation tasks disassembled from the same wave, and the same wave corresponds to a plurality of orders meeting a condition.
In S402, after a message indicating that the first operation task has been completed and a corresponding first operation container has been suspended from a suspension chain is received, a suspension chain conveyance subsystem is notified of the task identifier of the first operation task and the wave identifier of the wave to which it belongs, and the suspension chain conveyance subsystem conveys first operation containers corresponding to the various first operation tasks of the same wave to the same second operation region. The suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

An outer surface of the first operation container is provided with a graphic code identifier.

In this case, the graphic code identifier may also be scanned and identified to obtain a container identifier, a correspondence between the wave identifier, the identifier of the first operation task, and the container identifier is established, and the correspondence is provided to the suspension chain conveyance subsystem. The control component of the suspension chain conveyance subsystem, after a second operation region is assigned according to the wave identifier, stores a correspondence between the wave identifier, the identifier of the first operation task, the container identifier, and the second operation region.

### Embodiment 4

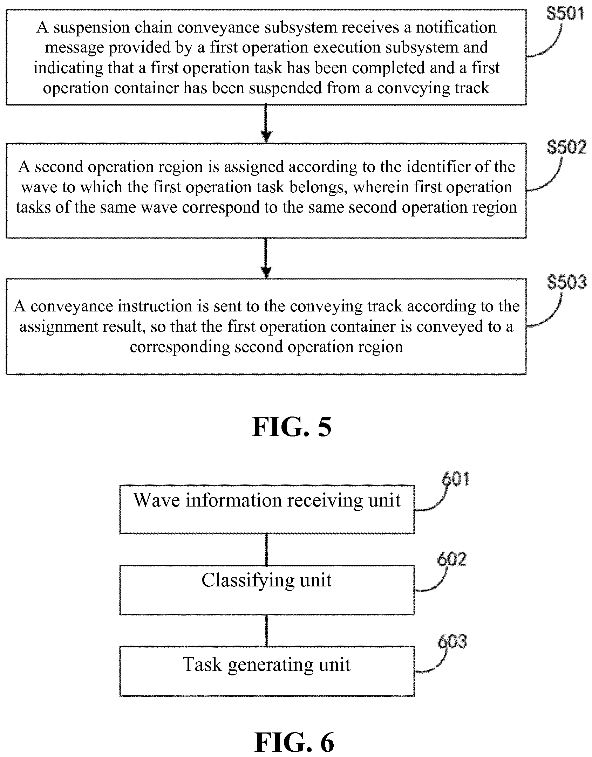

Embodiment 4 also corresponds to the aforementioned Embodiment 1. A data object information processing method is provided from the perspective of a suspension chain conveyance subsystem. Referring to FIG. 5, the method may include the following steps:
In S501: a suspension chain conveyance subsystem receives a notification message provided by a first operation execution subsystem and indicating that a first operation task has been completed and a first operation container has been suspended from a conveying track, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.
In S502, a second operation region is assigned according to the identifier of the wave to which the first operation task belongs, wherein the various first operation tasks of the same wave correspond to the same second operation region, and the same wave corresponds to a plurality of orders meeting a condition and is disassembled into a plurality of first operation tasks.
In S503, a conveyance instruction is sent to the conveying track according to the assignment result, so that the first operation container is conveyed to the corresponding second operation region.

In specific implementation, an identifier of the wave to which the first operation task related to the notification message belongs may be determined after the notification message provided by the first operation execution subsystem is received; then it is judged whether a second operation region has been assigned according to the identifier of the wave; if yes, the second operation region corresponding to the current first operation task is determined according to the assignment result; otherwise, a second operation region may be assigned to the wave, and a correspondence between the wave identifier and the identifier of the second operation region is stored.

In addition, in order to track exceptions, after the second operation region is assigned according to the wave identifier, assignment result information may also be provided to the exception management subsystem for storage. In the event of an exception, the cause of the exception can be queried by the exception management subsystem.

Reference can be made to the foregoing description for specific implementation details of Embodiment 1 to Embodiment 4, which will not be elaborated here.

Corresponding to Embodiment 2, a data object information processing apparatus is further provided in an embodiment of this application. Referring to FIG. 6, the apparatus is applied to a first operation task generation subsystem, including:
a wave information receiving unit 601 configured to receive operation-pending wave information, wherein a plurality of orders meeting a preset condition are combined into the same wave;
a classifying unit 602 configured to classify data objects included in the various orders of the same wave according to different first operation regions where the corresponding goods are located; and
a task generating unit 603 configured to generate a plurality of first operation tasks according to the classification results, and allocate them to a corresponding first operation execution subsystem, wherein after a message indicating that a first operation task has been completed and a first operation container has been suspended from a suspension chain is received, the first operation execution subsystem notifies a suspension chain conveyance subsystem of the task identifier of the current first operation task and the wave identifier of the wave to which it belongs, and the suspension chain conveyance subsystem conveys first operation containers corresponding to the various first operation tasks of the same wave to the same second operation region, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

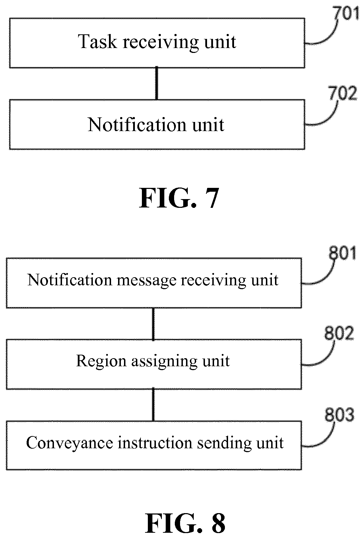

Corresponding to Embodiment 3, a data object information processing apparatus is further provided in an embodiment of this application. Referring to FIG. 7, the apparatus is applied to a first operation execution subsystem, including:
a task receiving unit 701 configured to receive a first operation task, wherein the first operation task is one of a plurality of first operation tasks disassembled from the same wave, and the same wave corresponds to a plurality of orders meeting a condition; and
a notification unit 702 configured to, after a message indicating that the first operation task has been completed and a corresponding first operation container has been suspended from a suspension chain is received, notify a suspension chain conveyance subsystem of the task identifier of the first operation task and the wave identifier of the wave to which it belongs, wherein the suspension chain conveyance subsystem conveys the first operation containers corresponding to the various first operation tasks of the same wave to the same second operation region, the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions.

In specific implementation, an outer surface of the first operation container is provided with a graphic code identifier;
in this case, the apparatus may further include:
a scanning unit configured to scan and identify the graphic code identifier to obtain a container identifier, establish a correspondence between the wave identifier, the identifier of the first operation task, and the container identifier, and provide the correspondence to the suspension chain conveyance subsystem. The control component of the suspension chain conveyance subsystem, after assigning a second operation region according to the wave identifier, stores a correspondence between the wave identifier, the identifiers of the first operation tasks, the container identifier, and the second operation region.

Corresponding to Embodiment 4, a data object information processing apparatus is further provided in an embodiment of this application. Referring to FIG. 8, the apparatus is applied to a suspension chain conveyance subsystem, including:
a notification message receiving unit 801 configured to receive a notification message provided by a first operation execution subsystem and indicating that a first operation task has been completed and a first operation container has been suspended from a conveying track, wherein the suspension chain conveyance subsystem is deployed in an offline store including a plurality of first operation regions and a plurality of second operation regions, and the suspension chain conveyance subsystem includes a control component and a conveying track configured to connect the various first operation regions and the various second operation regions;
a region assigning unit 802 configured to assign a second operation region according to the identifier of the wave to which the first operation task belongs, wherein the various first operation tasks of the same wave correspond to the same second operation region, and the same wave corresponds to a plurality of orders meeting a condition and is disassembled into a plurality of first operation tasks; and
a conveyance instruction sending unit 803 configured to send a conveyance instruction to the conveying track according to the assignment result, so that the first operation container is conveyed to the corresponding second operation region.

In specific implementation, the region assigning unit may specifically include:
a wave identifier determination subunit configured to determine the identifier of the wave to which the first operation task related to the notification message belongs after the notification message is received;
a judging subunit configured to judge whether a second operation region has been assigned for the wave identifier;
a first determination subunit configured to determine the second operation region corresponding to the current first operation task according to the assignment result if a second operation region has been assigned; and
a second determination subunit configured to assign a second operation region for the wave if a second operation region has not been assigned, and store a correspondence between the wave identifier and the identifier of the second operation region.

In addition, the apparatus may further include:
an assignment result providing unit configured to provide assignment result information to an exception management subsystem for storage after the second operation region is assigned according to the wave identifier, and when an exception occurs, query the cause of the exception by the exception management subsystem.

By use of the embodiments of this application, the first operations, conveyance, and second operations in the offline store can be connected organically. The containers produced from the first operations can be conveyed to the second operation regions automatically by the suspension chain subsystem. Moreover, different first operation tasks of the same wave may also converge in the same second operation region so as to improve the efficiency of the first and second operations, and the timeliness of delivery can be better guaranteed.

In addition, a fault management subsystem is further provided in the embodiment of this application, which may track first operation task status, assignment of the second operation regions, and the like. Once some first operation tasks of a certain wave fail to arrive at a scheduled second operation region on time, the fault management subsystem can be utilized to make a query and locate the cause of the exception, thus avoiding stalling of the operations of the whole wave.

From the description of the foregoing implementation manners, those skilled in the art may clearly understand that this application may be implemented by hardware, or may be implemented by software plus a necessary universal hardware platform. Based on such understanding, the essence of the technical solutions of this application, or the portion contributing to the prior art, may be embodied in the form of a software product. The computer software product may be stored in a storage medium, such as a ROM/RAM, a magnetic disk, or an optical disc, and include several instructions that enable a computer device (which may be a personal computer, a server, a network device, or the like) to execute the methods in the embodiments or certain portions of the embodiments of this application.

The embodiments in the specification are described progressively, identical or similar parts of the embodiments may be obtained with reference to each other, and each embodiment emphasizes a part different from other embodiments. In particular, the systems or system embodiments are basically similar to the method embodiments, so they are described simply. For related parts, refer to the descriptions of the parts in the method embodiment. The systems and the system embodiments described in the foregoing are merely illustrative. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. Those of ordinary skill in the art can understand and implement this application without creative efforts.

The data object information processing method, apparatus, and system provided in this application are described in the foregoing in detail, and the principles and implementation manners of this application are described by applying specific examples in this text. The foregoing descriptions on the embodiments are merely used to help understand the method of this application and the core ideas thereof. Meanwhile, for those of ordinary skill in the art, modifications may be made to the specific implementation manners and application scopes according to the idea of this application. In summary, the content of the specification should not be construed as limiting this application.

## Claims

1. A data object information processing system, comprising:
an order processing subsystem configured to merge a plurality of orders meeting a condition into the same wave according to a preset rule;
a first operation task generation subsystem configured to classify data objects comprised in the various orders of the same wave according to different first operation regions where the corresponding goods are located, generate a plurality of first operation tasks according to the classification results, and allocate them to a corresponding first operation execution subsystem;
the first operation execution subsystem configured to, after a message indicating that a current first operation task has been completed and a first operation container has been suspended from a suspension chain is received, notify a suspension chain conveyance subsystem of the task identifier of the current first operation task and the wave identifier of the wave to which it belongs, wherein goods corresponding to the current first operation task are contained in the first operation container; and
the suspension chain conveyance subsystem deployed in an offline store comprising a plurality of first operation regions and a plurality of second operation regions, wherein the suspension chain conveyance subsystem comprises a control component and a conveying track, the conveying track is configured to connect the first operation regions and the second operation regions, and the control component is configured to assign a second operation region according to the wave identifier after a notification message is received from the first operation execution subsystem, wherein the various first operation tasks of the same wave correspond to the same second operation region, and a conveyance instruction is sent to the conveying track according to the assignment result, for conveying the first operation container to the corresponding second operation region.

2. The system of claim 1, further comprising a second operation execution subsystem,
wherein the suspension chain conveyance subsystem is further configured to provide the second operation execution subsystem with a correspondence between the wave identifier and a second operation region identifier; and
the second operation execution subsystem is configured to generate a second operation task according to the wave identifier, and provide corresponding prompt information of the second operation region identifier.

3. The system of claim 1, wherein an outer surface of the first operation container is provided with graphic code information; and
the first operation execution subsystem is further configured to scan and identify the graphic code identifier to obtain a container identifier, establish a correspondence between the wave identifier, the identifier of the first operation task, and the container identifier, and provide the correspondence to the suspension chain conveyance subsystem; and the control component of the suspension chain conveyance subsystem stores a correspondence between the wave identifier, the identifier of the first operation task, the container identifier, and the second operation region after assigning the second operation region according to the wave identifier.

4. The system of claim 3, wherein
the conveying track comprises a trunk, a plurality of first branches, and a plurality of second branches, wherein one end of each first branch is located in one of the first operation regions, and the other end is connected to the trunk; one end of each second branch is located in one of the second operation regions, and the other end is connected to the trunk; and
the suspension chain conveyance subsystem further comprises a code scanning device located at the junctions of the trunk and each second branch and configured to scan the graphic code on the outer surface of a first operation container entering its scanning range, identify the container identifier, and provide it to the control component; the control component determines the second operation region corresponding to the container identifier according to the identified container identifier and sends a control instruction to the conveying track, and the conveying track transfers the container to a second branch corresponding to the second operation region.

5. The system of claim 3, further comprising the second operation execution subsystem,
wherein the control component in the suspension chain conveyance subsystem is further configured to provide the second operation execution subsystem with the correspondence between the wave identifier, the identifier of the first operation task, the container identifier, and the second operation region; and
the second operation execution subsystem is configured to scan the graphic code of the first operation container conveyed to the second operation region, and determine the corresponding wave identifier and the identifier of the first operation task according to the scanning result, to confirm completion of the first operation task in the wave.

6. The system of claim 5, wherein
the second operation execution subsystem is further configured to generate outbound delivery information after completion of the various first operation tasks in the same wave has been confirmed.

7. The system of claim 3, further comprising an exception management subsystem and the second operation execution subsystem,
wherein the control component in the suspension chain conveyance subsystem is further configured to, after assigning the second operation region according to the wave identifier, provide the correspondence between the wave identifier, the identifier of the first operation task, the container identifier, and the second operation region to the exception management subsystem for storage;
the second operation execution subsystem is further configured to send a query request for an exception to the exception management subsystem if a first operation container corresponding to a target first operation task in a wave is not conveyed to the second operation region within a preset time; and
the exception management subsystem is configured to provide a query result according to the stored assignment result when the query request for the exception is received.

8. The system of claim 7, wherein
the exception management subsystem is specifically configured to give a prompt in the query result that the first operation task has not been completed if assignment information of the second operation region corresponding to the target first operation task does not exist in the assignment result.

9. The system of claim 7, wherein
the exception management subsystem is specifically configured to provide the second operation region corresponding to the target first operation task in the query result if assignment information of the second operation region corresponding to the target first operation task exists in the assignment result but the second operation region is different from the second operation region corresponding to other first operation tasks in the wave to which the target first operation task belongs.

10. A data object information processing method, comprising:
a first operation task generation subsystem receiving operation-pending wave information, wherein a plurality of orders meeting a preset condition are merged into the same wave;
classifying data objects comprised in the various orders of the same wave according to different first operation regions where the corresponding goods are located; and
generating a plurality of first operation tasks according to the classification results, allocating them to a corresponding first operation execution subsystem, notifying, by the first operation execution subsystem, a suspension chain conveyance subsystem of the task identifier of a current first operation task and the wave identifier of the wave to which it belongs after a message indicating that the first operation task has been completed and a first operation container has been suspended from a suspension chain is received, and conveying, by the suspension chain conveyance subsystem, first operation containers corresponding to the various first operation tasks of the same wave to the same second operation region, wherein the suspension chain conveyance subsystem is deployed in an offline store comprising a plurality of first operation regions and a plurality of second operation regions, and the suspension chain conveyance subsystem comprises a control component and a conveying track configured to connect the various first operation regions and the various second operation regions.

11. A data object information processing method, comprising:
receiving a first operation task by a first operation execution subsystem, wherein the first operation task is one of a plurality of first operation tasks disassembled from the same wave, and the same wave corresponds to a plurality of orders meeting a condition; and
after a message indicating that the first operation task has been completed and a corresponding first operation container has been suspended from a suspension chain is received, notifying a suspension chain conveyance subsystem of the task identifier of the first operation task and the wave identifier of the wave to which it belongs, and conveying, by the suspension chain conveyance subsystem, first operation containers corresponding to the various first operation tasks of the same wave to the same second operation region, wherein the suspension chain conveyance subsystem is deployed in an offline store comprising a plurality of first operation regions and a plurality of second operation regions, and the suspension chain conveyance subsystem comprises a control component and a conveying track configured to connect the various first operation regions and the various second operation regions.

12. The method of claim 11, wherein an outer surface of the first operation container is provided with a graphic code identifier; and
the method further comprises:
scanning and identifying the graphic code identifier to obtain a container identifier, establishing a correspondence between the wave identifier, the identifier of the first operation task, and the container identifier, and providing the correspondence to the suspension chain conveyance subsystem; and storing, by the control component of the suspension chain conveyance subsystem, a correspondence between the wave identifier, the identifier of the first operation task, the container identifier, and the second operation region after assigning the second operation region according to the wave identifier.

13. A data object information processing method, comprising:
receiving, by a suspension chain conveyance subsystem, a notification message provided by a first operation execution subsystem and indicating that a first operation task has been completed and a first operation container has been suspended from a conveying track, wherein the suspension chain conveyance subsystem is deployed in an offline store comprising a plurality of first operation regions and a plurality of second operation regions, and the suspension chain conveyance subsystem comprises a control component and the conveying track configured to connect the various first operation regions and the various second operation regions;
assigning a second operation region according to the identifier of the wave to which the first operation task belongs, wherein the various first operation tasks of the same wave correspond to the same second operation region, and the same wave corresponds to a plurality of orders meeting a condition and is disassembled into a plurality of first operation tasks; and
sending a conveyance instruction to the conveying track according to the assignment result, so that the first operation container is conveyed to the corresponding second operation region.

14. The method of claim 13, wherein the assigning a second operation region according to the identifier of the wave to which the first operation task belongs comprises:
determining the identifier of the wave to which the first operation task related to the notification message belongs after the notification message is received;
judging whether a second operation region has been assigned for the wave identifier;
if yes, determining the second operation region corresponding to a current first operation task according to the assignment result; and
otherwise, assigning the second operation region for the wave, and storing a correspondence between the wave identifier and the identifier of the second operation region.

15. The method of claim 13, further comprising:
after assigning the second operation region according to the wave identifier, providing assignment result information to an exception management subsystem for storage, and when an exception occurs, querying the cause of the exception by the exception management subsystem.

16. A data object information processing apparatus, applied to a first operation task generation subsystem, comprising:
a wave information receiving unit configured to receive operation-pending wave information, wherein a plurality of orders meeting a preset condition are merged into the same wave;
a classifying unit configured to classify data objects comprised in the various orders of the same wave according to different first operation regions where the corresponding goods are located; and
a task generating unit configured to generate a plurality of first operation tasks according to the classification results, and allocate them to a corresponding first operation execution subsystem, wherein after a message indicating that a first operation task has been completed and a first operation container has been suspended from a suspension chain is received, the first operation execution subsystem notifies a suspension chain conveyance subsystem of the task identifier of the current first operation task and the wave identifier of the wave to which it belongs, and the suspension chain conveyance subsystem conveys first operation containers corresponding to the various first operation tasks of the same wave to the same second operation region, wherein the suspension chain conveyance subsystem is deployed in an offline store comprising a plurality of first operation regions and a plurality of second operation regions, and the suspension chain conveyance subsystem comprises a control component and a conveying track configured to connect the various first operation regions and the various second operation regions.

17. A data object information processing apparatus, applied to a first operation execution subsystem, comprising:
a task receiving unit configured to receive a first operation task, wherein the first operation task is one of a plurality of first operation tasks disassembled from the same wave, and the same wave corresponds to a plurality of orders meeting a condition; and
a notification unit configured to, after a message indicating that the first operation task has been completed and a corresponding first operation container has been suspended from a suspension chain is received, notify a suspension chain conveyance subsystem of the task identifier of the first operation task and the wave identifier of the wave to which it belongs, wherein the suspension chain conveyance subsystem conveys first operation containers corresponding to the various first operation tasks of the same wave to the same second operation region, the suspension chain conveyance subsystem is deployed in an offline store comprising a plurality of first operation regions and a plurality of second operation regions, and the suspension chain conveyance subsystem comprises a control component and a conveying track configured to connect the first operation regions and the second operation regions.

18. A data object information processing apparatus, applied to a suspension chain conveyance subsystem, comprising:
a notification message receiving unit configured to receive a notification message provided by a first operation execution subsystem and indicating that a first operation task has been completed and a first operation container has been suspended from a conveying track, wherein the suspension chain conveyance subsystem is deployed in an offline store comprising a plurality of first operation regions and a plurality of second operation regions, and the suspension chain conveyance subsystem comprises a control component and a conveying track configured to connect the various first operation regions and the various second operation regions;
a region assigning unit configured to assign a second operation region according to the identifier of the wave to which the first operation task belongs, wherein the various first operation tasks of the same wave correspond to the same second operation region, and the same wave corresponds to a plurality of orders meeting a condition and is disassembled into a plurality of first operation tasks; and
a conveyance instruction sending unit configured to send a conveyance instruction to the conveying track according to the assignment result, so that the first operation container is conveyed to the corresponding second operation region.
